# EUROPEAN PATENT SPECIFICATION

(11) **EP 3 829 920 B1**
(45) Date of publication and mention of the grant of the patent: **11.10.2023**
(21) Application number: 18928390.6
(22) Date of filing: 03.08.2018
(51) Int. Cl.: B60L 50/15, B60L 58/20

(54) **METHODS FOR DISCHARGING AND FOR CHARGING A HYBRID BATTERY SYSTEM AND BATTERY SYSTEM**
VERFAHREN ZUM ENTLADEN UND LADEN EINES HYBRIDEN BATTERIESYSTEMS UND BATTERIESYSTEM
PROCÉDÉS DE DÉCHARGE ET DE CHARGE D'UN SYSTÈME DE BATTERIE HYBRIDE ET SYSTÈME DE BATTERIE

(43) Date of publication of application: 09.06.2021
(73) Proprietor: Robert Bosch GmbH, 70442 Stuttgart (DE)
(72) Inventor: WOLL, Christoph, 70839 Gerlingen (DE); ZHENG, Hao, Shanghai 20030 (CN)
(86) International application number: PCT/CN2018/098509
(87) International publication number: WO 2020/024259

(56) References cited:
- EP-A2- 2 492 132
- CN-A- 102 059 939
- CN-A- 102 060 024
- CN-A- 103 786 593
- CN-A- 107 878 638
- CN-A- 107 878 638
- US-A1- 2012 235 473
- US-A1- 2014 265 554

## Description

The invention relates to a method for operating a hybrid battery system in an electric vehicle, whereat the battery system is designed to supply a discharging current to an electric motor for driving the electric vehicle, and whereat the battery system comprises at least one high energy battery and at least one high power battery. The invention also relates to a method for charging a hybrid battery system in an electric vehicle, whereat the battery system is designed to be charged by a charging current caused by recuperation from an electric motor of the electric vehicle, and whereat the battery system comprises at least one high energy battery and at least one high power battery. The invention also relates to a battery system that comprises at least one high energy battery, at least one high power battery and a control unit for controlling and supervising the at least one high energy battery and at least one high power battery.

### State of the Art

Electrical energy can be stored by means of batteries. Batteries convert chemical energy into electrical energy. Particularly, rechargeable batteries are known to be able to be charged and discharged several times. Rechargeable batteries are used inter alia in electric vehicles to supply a current to an electric motor for driving the electric vehicle. Different kinds of batteries are known that have different features. For example, high energy batteries and high power batteries are known.

High energy batteries have a relatively high charging capacity and hence may store a relatively high amount of electrical energy. High energy batteries for example comprise lithium ion battery cells that have a relatively high energy density. High power batteries may supply a relatively high electrical power, in particular by supplying a relatively high electrical current. High power batteries for example comprise capacitors.

Battery systems may comprise several battery units of different type. For example, a hybrid battery system for an electric vehicle may comprise a high energy battery and a high power battery. Methods for operating such hybrid battery systems in multiple operating conditions are necessary. Such methods inter alia include controlling and supervising the high energy battery and the high power battery in discharging condition, when supplying a discharging current to drive an electric motor for driving the electric vehicle, as well as in charging condition, especially when being charged by a charging current caused by recuperation.

For this purpose, battery systems comprise a control unit for controlling and supervising the high energy battery and the high power battery. Thereat, the control unit includes appropriate control software for executing an appropriate method for controlling and supervising the battery system. In particular, the high energy battery may be exclusively active, the high power battery may be exclusively active or both batteries may be active together.

The document US 2016/176298 A1 discloses an energy source system having multiple energy storing devices. Said system also includes an ultra-capacitor. The ultra-capacitor is connected to batteries in parallel and is used to meet the high power requirement. Furthermore, a controller is supplied, inter alia to determine which of the battery and the capacitor should be activated in certain conditions.

The document CN 104859464 A discloses a method and a device for power compensation and energy recovery for an electric vehicle. The method is used for power compensation and energy recovery for the electric vehicle through series-parallel switching between a super capacitor and an energy storage battery pack of the electric vehicle. In particular, the supercapacitor is connected to the batteries in parallel and is used for current compensation when the current requirement is high.

### Disclosure of the Invention

A method for discharging a hybrid battery system in an electric vehicle is proposed. The battery system is designed to supply a discharging current to an electric motor. The electric motor serves for driving the electric vehicle. The battery system comprises at least one high energy battery and at least one high power battery.

The high energy battery has a relatively high charging capacity and hence may store a relatively high amount of electrical energy. In particular, the charging capacity of the high energy battery is higher than the charging capacity of the high power battery. The high energy battery for example comprises lithium ion battery cells.

The high power battery may supply a relatively high electrical power, in particular by supplying a relatively high electrical current. In particular, the high power battery may supply a higher electrical power and a higher electrical current than the high energy battery. The high power battery for example comprises capacitors.

Thereat, the at least one high energy battery is used to supply a discharging current to the electric motor when a speed of the electric vehicle is higher than a determined first speed value, and the at least one high power battery is used to supply a discharging current to the electric motor when the speed of the electric vehicle is lower than the determined first speed value.

There are certain situations when the high energy battery is used exclusively to supply the discharging current to the electric motor, and certain situations when the high power battery is used exclusively to supply the discharging current to the electric motor. And there are certain situations when the high energy battery and the high power battery are used together to supply the discharging current to the electric motor. Such situations are described in the following.

According to an advantageous embodiment of the invention, the at least one high power battery is additionally used to supply a discharging current to the electric motor when the speed of the electric vehicle is higher than the determined first speed value and when the discharging current required by the electric motor is higher than a determined discharging current value. Said determined discharging current value in particular corresponds to a maximum electrical current that the high energy battery is able to supply.

Preferably, the at least one high energy battery is exclusively used to supply a discharging current to the electric motor when the speed of the electric vehicle is higher than the determined first speed value and when the discharging current required by the electric motor is lower than a determined discharging current value.

According to an advantageous embodiment of the invention, the at least one high energy battery is additionally used to supply a discharging current to the electric motor when the speed of the electric vehicle is lower than the determined first speed value and when the speed of the electric vehicle is higher than a determined second speed value. Therein, the determined second speed value is lower than the determined first speed value.

Preferably, the at least one high power battery is exclusively used to supply a discharging current to the electric motor when the speed of the electric vehicle is lower than the determined first speed value and when the speed of the electric vehicle is lower than a determined second speed value. Therein, the determined second speed value is lower than the determined first speed value.

For example, the determined first speed value corresponds to 50 km/h. For example, the determined second speed value corresponds to 20 km/h. Hence, when the speed of the electric vehicle is higher than the determined first speed value, then the electric vehicle is probably running on a highway or on a country road. When the speed of the electric vehicle is lower than the determined second speed value, then the electric vehicle is probably running in a car park or in an underground garage. When the speed of the electric vehicle is between the determined first speed value and the determined second speed value, then the electric vehicle is probably running in a city.

In general, the high energy battery is discharged by supplying a discharging current when relatively low currents are required and hence the high energy battery is discharged relatively slowly. Thus, charging of the high energy battery is necessary less often. The high power battery is discharged by supplying a discharging current when relatively high currents are required. Both, the high energy battery and the high power battery are discharged together, when relatively high electrical power is required.

Also, a method for charging a hybrid battery system in an electric vehicle is proposed. The battery system is designed to be charged by a charging current caused by recuperation from an electric motor of the electric vehicle. The electric motor serves for driving the electric vehicle. The battery system comprises at least one high energy battery and at least one high power battery.

The high energy battery has a relatively high charging capacity and hence may store a relatively high amount of electrical energy. In particular, the charging capacity of the high energy battery is higher than the charging capacity of the high power battery. The high energy battery for example comprises lithium ion battery cells.

The high power battery may supply a relatively high electrical power, in particular by supplying a relatively high electrical current. In particular, the high power battery may supply a higher electrical power and a higher electrical current than the high energy battery. The high power battery for example comprises capacitors.

Thereat, the at least one high power battery is charged by a charging current unless a state of charge of the high power battery is higher than a determined first level. Said determined first level corresponds approximately to the maximum charging level of the high power battery. For example, the determined first level is 99% of the maximum charging level of the high power battery. When the state of charge of the high power battery is higher than the determined first level, then the high power battery is fully charged.

When the state of charge of the high power battery is higher than the determined first level, then the high power battery is not charged by the charging current. In this case, the high energy battery is charged by the charging current unless the high energy battery is fully charged. This is the only situation when the high energy battery is exclusively charged by the charging current.

There are certain situations when the high power battery is exclusively charged by the charging current, and there are certain situations when the high energy battery and the high power battery are charged together by the charging current. Such situations are described in the following.

According to an advantageous embodiment of the invention, the at least one high power battery is exclusively charged by the charging current when a state of charge of the high energy battery is higher than a determined second level. Said determined second level corresponds approximately to the maximum charging level of the high energy battery. For example, the determined second level is 99% of the maximum charging level of the high energy battery. When the state of charge of the high energy battery is higher than the determined second level, then the high energy battery is fully charged.

Preferably, the at least one high energy battery is additionally charged by the charging current when a state of charge of the high energy battery is lower than the determined second level and when the charging current is higher than a determined charging current value. Thereat, the determined charging current value corresponds to a maximum allowable current to charge the high power battery.

According to an advantageous embodiment of the invention, the at least one high energy battery is additionally charged by the charging current when a state of charge of the high energy battery is lower than the determined second level and when the charging current is lower than a determined charging current value and when the state of charge of the high power battery is higher than a determined third level. Therein, the determined third level is lower than the determined first level. For example, the determined third level is 85% of the maximum charging level of the high power battery. When the state of charge of the high power battery is higher than the determined third level, then the high power battery is almost fully charged.

Preferably, the at least one high power battery is exclusively charged by the charging current when a state of charge of the high energy battery is lower than the determined second level and when the charging current is lower than the determined charging current value and when the state of charge of the high power battery is lower than the determined third level.

In general, the high power battery is charged by the charging current caused by recuperation from the electric motor of the electric vehicle primarily as aging effects on the high power battery by charging and discharging cycles are low. The high energy battery is only charged casually.

Furthermore, a battery system for an electric vehicle is proposed. The battery for an electric vehicle system comprises at least one high energy battery, at least one high power battery and a control unit for controlling and supervising the at least one high energy battery and at least one high power battery. Thereat, the control unit is designed to execute a method according to the invention, as described above.

The method according to the invention as well as the battery system according to the invention is usable advantageously in an electric vehicle.

### Advantages of the Invention

The methods according to the invention allow operation, in particular charging and discharging, of the high power battery relatively often, as aging effects of the high power battery are relatively low and hence the high power battery is not wearing significantly. The methods also allow keeping the high power battery on a relatively high charge level such the high power battery is ready to supply a high discharging current when necessary. Thereat, the decision criteria used in the methods according to the invention are relatively convenient for software application. Furthermore, electrical energy caused by recuperation from an electric motor of the electric vehicle is used effectively and dissipation of such electrical energy is minimized. Also, aging effects of the high energy battery are reduced as operation, in particular charging and discharging, of the high energy battery are reduced significantly. Thus, the life period of the high energy battery, and hence life period of the battery system, are extended advantageously.

### Brief Description of the Drawings

For a better understanding of the aforementioned embodiments of the invention as well as additional embodiments thereof, reference should be made to the description of embodiments below, in conjunction with the appended drawings showing:
- Figure 1: a schematic view at a battery system,
- Figure 2: a flow chart showing a method for discharging a battery system given in figure 1 and
- Figure 3: a flow chart showing a method for charging a battery system given in figure 1.

Hereinafter, preferred embodiments of the present invention will be described with reference to the drawings. The drawings only provide schematic views of the invention. Like reference numerals refer to corresponding parts, elements or components throughout the figures, unless indicated otherwise.

### Description of Embodiments

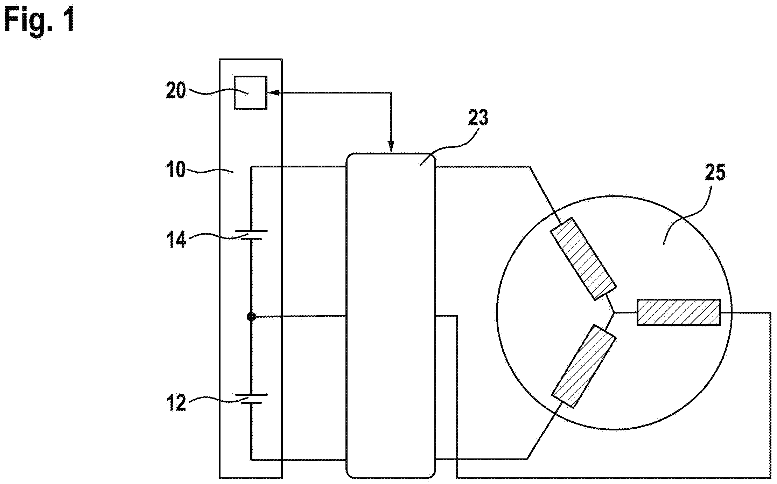

Figure 1 shows a schematic view at a battery system 10 which is connected to a power electronic circuit 23. Presently, the power electronic circuit 23 is a multilevel converter with a center tap. A three-phase electric motor 25 of an electric vehicle is connected with the power electronic circuit 23 via three phase conductors. The power electronic circuit 23 serves for supplying electrical energy to the electric motor 25.

The battery system 10 can be operated in a motor mode, wherein the battery system 10 supplies electrical energy to the electric motor 25 via the power electronic circuit 23. When operated in motor mode, the battery system 10 is discharged. The battery system 10 can also be operated in a generator mode, wherein the electric motor 25 supplies electrical energy to the battery system 10 via the power electronic circuit 23. When operated in generator mode, the battery system 10 is charged. Thereat, a charging current is generally caused by recuperation from the electric motor 25 of the electric vehicle.

The battery system 10 comprises a high energy battery 12 and a high power battery 14 that are electrically connected in series. The high energy battery 12 has a relatively high charging capacity and the high power battery 14 may supply a relatively high electrical power, in particular by supplying a relatively high electrical current. The high energy battery 12 and the high power battery 14 are electrically connected to the power electronic circuit 23 such that both, the high energy battery 12 and the high power battery 14 are connected to the center tap of the power electronic circuit 23.

The battery system 10 further comprises a control unit 20 for controlling and supervising the high energy battery 12 and the high power battery 14. The control unit 20 is also connected to the power electronic circuit 23, for example by means of a digital bus-system.

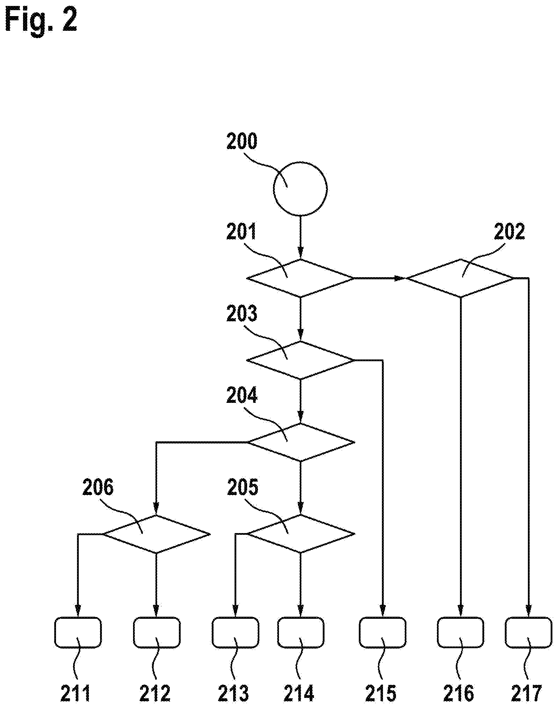

Figure 2 shows a flow chart showing a method for discharging the battery system 10 given in figure 1 in motor mode. In a start step 200, the battery system 10 is connected to the electric motor 25 of the electric vehicle via the power electronic circuit 23. The battery system 10 supplies a discharging current to the electric motor 25 for driving the electric vehicle.

In a step 201, the state of charge of the high energy battery 12 is checked. If the state of charge of the high energy battery 12 is zero or almost zero, then the high energy battery 12 is empty. In this case, the state of charge of the high power battery 14 is checked in a step 202. If the state of charge of the high power battery 14 is zero or almost zero, then the high power battery 14 is empty. If the high energy battery 12 and the high power battery 14 are empty, then no electrical energy is available for driving the electric vehicle. Hence, driving operation is stopped in a step 217. If the high power battery 14 is not empty, then the high power battery 14 exclusively supplies a discharging current to the electric motor 25 in a step 216.

If the high energy battery 12 is not empty, then the state of charge of the high power battery 14 is checked in a step 203. If the high power battery 14 is empty, then the high energy battery 12 exclusively supplies a discharging current to the electric motor 25 in a step 215.

If the high power battery 14 is not empty, then the speed of the electric vehicle is checked in a step 204. If the speed of the electric vehicle is higher than a determined first speed value which is for example 50 km/h, then the high energy battery 12 supplies a discharging current to the electric motor 25. If the speed of the electric vehicle is lower than the determined first speed value, then the high power battery 14 supplies a discharging current to the electric motor 25.

If the speed of the electric vehicle is higher than the determined first speed value, then in a step 205 the discharging current required by the electric motor 25 is checked. If the discharging current required by the electric motor 25 is lower than a determined discharging current value, then the high energy battery 12 exclusively supplies a discharging current to the electric motor 25 in a step 214. If the discharging current required by the electric motor 25 is higher than the determined discharging current value, then the high power battery 14 additionally supplies a discharging current to the electric motor 25 in a step 213.

If the speed of the electric vehicle is lower than the determined first speed value, then in a step 206 the speed of the electric vehicle is checked once more. If the speed of the electric vehicle is lower than a determined second speed value, which is for example 20 km/h, then the high power battery 14 exclusively supplies a discharging current to the electric motor 25 in a step 212. If the speed of the electric vehicle is lower than the determined second speed value, then the high energy battery 12 additionally supplies a discharging current to the electric motor 25 in a step 211.

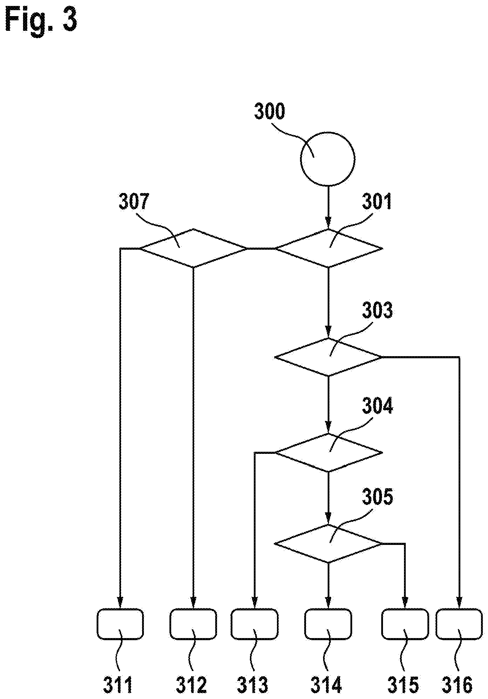

Figure 3 shows a flow chart showing a method for charging the battery system 10 given in figure 1 in generator mode. In a start step 300, the battery system 10 is connected to the electric motor 25 of the electric vehicle via the power electronic circuit 23. The electric motor 25 supplies a charging current caused by recuperation to the battery system 10 for charging the battery system 10.

In a step 301, the state of charge of the high power battery 14 is checked. If the state of charge of the high power battery 14 is higher than a determined first level, which is for example 99% of the maximum charging level of the high power battery 14, then the high power battery 14 is full. In this case, the state of charge of the high energy battery 12 is checked in a step 302. If the state of charge of the high energy battery 12 is higher than a determined second level, which is for example 99% of the maximum charging level of the high energy battery 12, then the high energy battery 12 is full. If the high energy battery 12 and the high power battery 14 are full, then no charging of the battery system 10 is possible. Hence, charging operation is stopped in a step 311. If the high energy battery 12 is not full, then the high energy battery 12 is exclusively charged in a step 312.

If the high power battery 14 is not full, then the high power battery 14 is charged by the charging current of the electric motor 25. In a step 303, the state of charge of the high energy battery 12 is checked. If the high energy battery 12 is full, then the high power battery 14 is exclusively charged in a step 316.

If the high power battery 14 is not full and the high energy battery 12 is not full, then the charging current is checked in a step 304. If the charging current is higher than a determined charging current value which for example corresponds to a maximum allowable current to charge the high power battery 14, then the high energy battery 12 is additionally charged in a step 313.

If the charging current is lower than the determined charging current value, then the state of charge of the high power battery 14 is checked in a step 305. If the state of charge of the high power battery 14 is higher than a determined third level which is for example 85% of the maximum charging level of the high power battery 14, then the high energy battery 12 is additionally charged in a step 315.

If the state of charge of the high power battery 14 is lower than the determined third level, then the high power battery 14 is exclusively charged in a step 314.

The scope of the invention is disclosed by appended independent claims 1 and 10 and the dependent claims 2-9.

## Claims

1. A method for discharging a hybrid battery system (10) in an electric vehicle,
the battery system (10) being designed to supply a discharging current to an electric motor (25) for driving the electric vehicle and
the battery system (10) comprising at least one high energy battery (12) and at least one high power battery (14), whereat
the at least one high energy battery (12) supplies a discharging current to the electric motor (25) when a speed of the electric vehicle is higher than a determined first speed value, and **whereat**
the at least one high power battery (14) supplies a discharging current to the electric motor (25) when the speed of the electric vehicle is lower than the determined first speed value or the high power battery (14) exclusively supplies a discharging current to the electric motor (25) when a state of charge of the high energy battery (12) is lower than a determined first level and when the state of charge of the high power battery (14) is higher than a determined second level.

2. The method according to claim 1, whereat
the at least one high power battery (14) additionally supplies a discharging current to the electric motor (25) when
the speed of the electric vehicle is higher than the determined first speed value and when
the discharging current required by the electric motor (25) is higher than a determined discharging current value.

3. The method according to one of the preceding claims, whereat
the at least one high energy battery (12) exclusively supplies a discharging current to the electric motor (25) when
the speed of the electric vehicle is higher than the determined first speed value and when
the discharging current required by the electric motor (25) is lower than a determined discharging current value.

4. The method according to one of the preceding claims, whereat
the at least one high energy battery (12) additionally supplies a discharging current to the electric motor (25) when
the speed of the electric vehicle is lower than the determined first speed value and when
the speed of the electric vehicle is higher than a determined second speed value, wherein
the determined second speed value is lower than the determined first speed value.

5. The method according to one of the preceding claims, whereat
the at least one high power battery (14) exclusively supplies a discharging current to the electric motor (25) when
the speed of the electric vehicle is lower than the determined first speed value and when
the speed of the electric vehicle is lower than a determined second speed value, wherein
the determined second speed value is lower than the determined first speed value.

6. A method for charging a hybrid battery system (10) in an electric vehicle,
the battery system (10) being designed to be charged by a charging current caused by recuperation from an electric motor (25) of the electric vehicle and
the battery system (10) comprising at least one high energy battery (12) and at least one high power battery (14), **whereat**
the at least one high power battery (14) is charged by a charging current unless a state of charge of the high power battery (14) is higher than a determined first level, whereat
the at least one high power battery (14) is exclusively charged by the charging current when
a state of charge of the high energy battery (12) is higher than a determined second level.

7. The method according to claim 6, whereat
the at least one high energy battery (12) is additionally charged by the charging current when
a state of charge of the high energy battery (12) is lower than the determined second level and when
the charging current is higher than a determined charging current value.

8. The method according to claim 7, whereat
the at least one high energy battery (12) is additionally charged by the charging current when
a state of charge of the high energy battery (12) is lower than the determined second level and when
the charging current is lower than a determined charging current value and when
the state of charge of the high power battery (14) is higher than a determined third level, wherein
the determined third level is lower than the determined first level.

9. The method according to claim 8, whereat
the at least one high power battery (14) is exclusively charged by the charging current when
a state of charge of the high energy battery (12) is lower than the determined second level and when
the charging current is lower than a determined charging current value and when
the state of charge of the high power battery (14) is lower than the determined third level.

10. Battery system (10) for an electric vehicle, comprising
at least one high energy battery (12), at least one high power battery (14) and a control unit (20) for controlling and supervising the at least one high energy battery (12) and at least one high power battery (14), whereat
the control unit (20) is designed to execute a method according to one of the preceding claims.

## Patentansprüche

1. Verfahren zum Entladen eines Hybridbatteriesystems (10) in einem Elektrofahrzeug,
wobei das Batteriesystem (10) so ausgelegt ist, dass es einen Elektromotor (25) zum Antrieb des Elektrofahrzeugs mit einem Entladestrom versorgt, und wobei das Batteriesystem (10) mindestens eine Hochenergiebatterie (12) und mindestens eine Hochleistungsbatterie (14) umfasst,
wobei die mindestens eine Hochenergiebatterie (12) einen Entladestrom an den Elektromotor (25) liefert, wenn eine Geschwindigkeit des Elektrofahrzeugs höher als ein bestimmter erster Geschwindigkeitswert ist, und
wobei die mindestens eine Hochleistungsbatterie (14) einen Entladestrom an den Elektromotor (25) liefert, wenn die Geschwindigkeit des Elektrofahrzeugs geringer ist als der ermittelte erste Geschwindigkeitswert, oder die Hochleistungsbatterie (14) ausschließlich einen Entladestrom an den Elektromotor (25) liefert, wenn ein Ladezustand der Hochenergiebatterie (12) geringer ist als ein ermittelter erster Wert und wenn der Ladezustand der Hochleistungsbatterie (14) höher ist als ein ermittelter zweiter Wert.

2. Verfahren nach Anspruch 1,
wobei die mindestens eine Hochleistungsbatterie (14) zusätzlich einen Entladestrom an den Elektromotor (25) liefert, wenn die Geschwindigkeit des Elektrofahrzeugs höher ist als der festgelegte erste Geschwindigkeitswert und wenn der vom Elektromotor (25) benötigte Entladestrom höher ist als ein festgelegter Entladestromwert.

3. Verfahren nach einem der vorhergehenden Ansprüche,
wobei die mindestens eine Hochenergiebatterie (12) dem Elektromotor (25) ausschließlich dann einen Entladestrom zuführt, wenn die Geschwindigkeit des Elektrofahrzeugs höher ist als der festgelegte erste Geschwindigkeitswert und wenn der vom Elektromotor (25) benötigte Entladestrom niedriger ist als ein festgelegter Entladestromwert.

4. Verfahren nach einem der vorhergehenden Ansprüche,
wobei die mindestens eine Hochenergiebatterie (12) zusätzlich einen Entladestrom an den Elektromotor (25) liefert, wenn die Geschwindigkeit des Elektrofahrzeugs niedriger ist als der ermittelte erste Geschwindigkeitswert und wenn die Geschwindigkeit des Elektrofahrzeugs höher ist als ein ermittelter zweiter Geschwindigkeitswert,
wobei der ermittelte zweite Geschwindigkeitswert niedriger ist als der ermittelte erste Geschwindigkeitswert.

5. Verfahren nach einem der vorhergehenden Ansprüche,
wobei die mindestens eine Hochleistungsbatterie (14) dem Elektromotor (25) ausschließlich dann einen Entladestrom zuführt, wenn die Geschwindigkeit des Elektrofahrzeugs niedriger ist als der ermittelte erste Geschwindigkeitswert und wenn die Geschwindigkeit des Elektrofahrzeugs niedriger ist als ein ermittelter zweiter Geschwindigkeitswert,
wobei der ermittelte zweite Geschwindigkeitswert niedriger ist als der ermittelte erste Geschwindigkeitswert.

6. Verfahren zum Laden eines Hybridbatteriesystems (10) in einem Elektrofahrzeug, wobei das Batteriesystem (10) so ausgelegt ist, dass es durch einen Ladestrom geladen wird, der durch Rekuperation von einem Elektromotor (25) des Elektrofahrzeugs verursacht wird, und das Batteriesystem (10) mindestens eine Hochenergiebatterie (12) und mindestens eine Hochleistungsbatterie (14) umfasst,
wobei die mindestens eine Hochleistungsbatterie (14) mit einem Ladestrom geladen wird, solange ein Ladezustand der Hochleistungsbatterie (14) nicht höher ist als ein bestimmter erster Pegel,
wobei die mindestens eine Hochleistungsbatterie (14) ausschließlich mit dem Ladestrom geladen wird, wenn ein Ladezustand der Hochleistungsbatterie (12) höher als ein bestimmter zweiter Pegel ist.

7. Verfahren nach Anspruch 6,
wobei die mindestens eine Hochenergiebatterie (12) zusätzlich mit dem Ladestrom geladen wird, wenn ein Ladezustand der Hochenergiebatterie (12) niedriger als der ermittelte zweite Pegel ist und wenn der Ladestrom höher als ein ermittelter Ladestromwert ist.

8. Verfahren nach Anspruch 7,
wobei die mindestens eine Hochenergiebatterie (12) zusätzlich mit dem Ladestrom geladen wird, wenn ein Ladezustand der Hochenergiebatterie (12) kleiner als der ermittelte zweite Pegel ist und wenn der Ladestrom kleiner als ein ermittelter Ladestromwert ist und wenn der Ladezustand der Hochenergiebatterie (14) größer als ein ermittelter dritter Pegel ist,
wobei der ermittelte dritte Pegel niedriger ist als der ermittelte erste Pegel.

9. Verfahren nach Anspruch 8,
wobei die mindestens eine Hochleistungsbatterie (14) ausschließlich durch den Ladestrom geladen wird, wenn ein Ladezustand der Hochenergiebatterie (12) niedriger als der ermittelte zweite Pegel ist und wenn der Ladestrom niedriger als ein ermittelter Ladestromwert ist und wenn der Ladezustand der Hochleistungsbatterie (14) niedriger als der ermittelte dritte Pegel ist.

10. Batteriesystem (10) für ein Elektrofahrzeug, mit mindestens einer Hochenergiebatterie (12), mindestens einer Hochleistungsbatterie (14) und einer Steuereinheit (20) zur Steuerung und Überwachung der mindestens einen Hochenergiebatterie (12) und der mindestens einen Hochleistungsbatterie (14),
wobei die Steuereinheit (20) zur Durchführung eines Verfahrens nach einem der vorhergehenden Ansprüche ausgebildet ist.

## Revendications

1. Procédé de décharge d'un système de batterie hybride (10) dans un véhicule électrique,
le système de batterie (10) étant conçu pour alimenter un moteur électrique (25) avec un courant de décharge pour entraîner le véhicule électrique, et
le système de batterie (10) comprenant au moins une batterie à haute énergie (12) et au moins une batterie à haute puissance (14),
l'au moins une batterie à haute énergie (12) alimentant le moteur électrique (25) avec un courant de décharge lorsqu'une vitesse du véhicule électrique est supérieure à une première valeur de vitesse déterminée, et
l'au moins une batterie à haute puissance (14) alimentant le moteur électrique (25) avec un courant de décharge lorsque la vitesse du véhicule électrique est inférieure à la première valeur de vitesse déterminée ou la batterie à haute puissance (14) alimentant exclusivement le moteur électrique (25) avec un courant de décharge lorsqu'un état de recharge de la batterie à haute énergie (12) est inférieur à un premier niveau déterminé et lorsque l'état de recharge de la batterie à haute puissance (14) est supérieur à un deuxième niveau déterminé.

2. Procédé selon la revendication 1, dans lequel :
l'au moins une batterie à haute puissance (14) alimente en outre le moteur électrique (25) avec un courant de décharge :
lorsque la vitesse du véhicule électrique est supérieure à la première valeur de vitesse déterminée, et
lorsque le courant de décharge requis par le moteur électrique (25) est supérieur à une valeur de courant de décharge déterminée.

3. Procédé selon l'une des revendications précédentes, dans lequel :
l'au moins une batterie à haute énergie (12) alimente exclusivement le moteur électrique (25) avec un courant de décharge :
lorsque la vitesse du véhicule électrique est supérieure à la première valeur de vitesse déterminée, et
lorsque le courant de décharge requis par le moteur électrique (25) est inférieur à une valeur de courant de décharge déterminée.

4. Procédé selon l'une des revendications précédentes, dans lequel :
l'au moins une batterie à haute énergie (12) alimente en outre le moteur électrique (25) avec un courant de décharge :
lorsque la vitesse du véhicule électrique est inférieure à la première valeur de vitesse déterminée, et
lorsque la vitesse du véhicule électrique est supérieure à une seconde valeur de vitesse déterminée,
la seconde valeur de vitesse déterminée étant inférieure à la première valeur de vitesse déterminée.

5. Procédé selon l'une des revendications précédentes, dans lequel :
l'au moins une batterie à haute puissance (14) alimente exclusivement le moteur électrique (25) avec un courant de décharge :
lorsque la vitesse du véhicule électrique est inférieure à la première valeur de vitesse déterminée, et
lorsque la vitesse du véhicule électrique est inférieure à une seconde valeur de vitesse déterminée,
la seconde valeur de vitesse déterminée étant inférieure à la première valeur de vitesse déterminée.

6. Procédé de recharge d'un système de batterie hybride (10) dans un véhicule électrique,
le système de batterie (10) étant conçu pour être rechargé par un courant de recharge provoqué par une récupération d'un moteur électrique (25) du véhicule électrique, et
le système de batterie (10) comprenant au moins une batterie à haute énergie (12) et au moins une batterie à haute puissance (14),
l'au moins une batterie à haute puissance (14) étant rechargée par un courant de recharge à moins qu'un état de recharge de la batterie à haute puissance (14) ne soit supérieur à un premier niveau déterminé,
l'au moins une batterie à haute puissance (14) étant exclusivement rechargée par le courant de recharge lorsqu'un état de recharge de la batterie à haute énergie (12) est supérieur à un deuxième niveau déterminé.

7. Procédé selon la revendication 6, dans lequel :
l'au moins une batterie à haute énergie (12) est rechargée en outre par le courant de recharge :
lorsqu'un état de recharge de la batterie à haute énergie (12) est inférieur au deuxième niveau déterminé, et
lorsque le courant de recharge est supérieur à une valeur de courant de recharge déterminée.

8. Procédé selon la revendication 7, dans lequel :
l'au moins une batterie à haute énergie (12) est rechargée en outre par le courant de recharge :
lorsqu'un état de recharge de la batterie à haute énergie (12) est inférieur au deuxième niveau déterminé, et
lorsque le courant de recharge est inférieur à une valeur de courant de recharge déterminée, et
lorsque l'état de recharge de la batterie à haute puissance (14) est supérieur à un troisième niveau déterminé,
le troisième niveau déterminé étant inférieur au premier niveau déterminé.

9. Procédé selon la revendication 8, dans lequel :
l'au moins une batterie à haute puissance (14) est exclusivement rechargée par le courant de recharge :
lorsqu'un état de recharge de la batterie à haute énergie (12) est inférieur au deuxième niveau déterminé, et
lorsque le courant de recharge est inférieur à une valeur de courant de recharge déterminée, et
lorsque l'état de recharge de la batterie à haute puissance (14) est inférieur au troisième niveau déterminé.

10. Système de batterie (10) pour un véhicule électrique, comprenant :
au moins une batterie à haute énergie (12), au moins une batterie à haute puissance (14) et une unité de commande (20) pour commander et superviser l'au moins une batterie à haute énergie (12) et l'au moins une batterie à haute puissance (14),
l'unité de commande (20) étant conçue pour exécuter un procédé selon l'une des revendications précédentes.
